# EUROPÄISCHE PATENTSCHRIFT

(11) **EP 2 067 397 B1**
(45) Veröffentlichungstag und Bekanntmachung des Hinweises auf die Patenterteilung: **22.06.2011**
(21) Anmeldenummer: 08168993.7
(22) Anmeldetag: 13.11.2008
(51) Int. Cl.: A01D 41/14, A01B 73/04

(54) **Erntevorsatz für landwirtschaftliche Erntemaschinen zum Aufnehmen und Weiterfördern von Halmfrüchten**
Harvester head to gather and transport cereals in an agricultural harvesting machine
Tête de récolte servant à cueillir et transporter des céréales pour une récolteuse agricole

(30) Priorität: 04.12.2007 DE 102007058312
(43) Veröffentlichungstag der Anmeldung: 10.06.2009
(73) Patentinhaber: Maschinenfabrik Kemper GmbH & Co. KG, 48973 Stadtlohn (DE)
(72) Erfinder: Rickert, Clemens, 49683, Ahaus (DE); Grobmeier, Jens, 48703, Stadtlohn (DE); Schulze Hockenbeck, Leo, 48351, Everswinkel (DE); Weitenberg, Klemens, 46325, Borken (DE); Hüning, Martin, 48727, Billerbeck (DE)
(74) Vertreter: Holst, Sönke

(56) Entgegenhaltungen:
- EP-A- 0 960 559
- DE-A1- 10 303 380
- DE-A1- 19 800 356
- DE-U1- 29 817 666
- US-A- 4 133 391
- US-A1- 2007 079 976

## Beschreibung

Die Erfindung betrifft einen Erntevorsatz für landwirtschaftliche Erntemaschinen zum Aufnehmen und Weiterfördern von Halmfrüchten, beispielsweise Maispflanzen, der beim Erntebetrieb in einer Vorwärtsrichtung über ein Feld bewegbar ist, mit einem an einer Erntemaschine anbringbaren Mittelteil, zwei ersten Seitenteilen, die an jeweils einer anderen Seite des Mittelteils um eine erste, sich horizontal und in der Vorwärtsrichtung erstreckende Achse zwischen einer Arbeitsstellung und einer Transportstellung schwenkbar angelenkt sind, und zwei zweiten Seitenteilen, die jeweils außenseitig an einem der ersten Seitenteile um eine zweite, sich horizontal und in der Vorwärtsrichtung erstreckende Achse zwischen einer Arbeitsstellung und einer Transportstellung schwenkbar angelenkt sind, wobei der Mittelteil und die ersten und zweiten Seitenteile in der Arbeitsstellung seitlich nebeneinander angeordnete Mäh- und Förderelemente umfassen und die Seitenteile jeder Seite des Erntevorsatzes gegen- oder gleichsinnig um die zugehörigen Achsen zwischen der Arbeitsstellung und der Transportstellung verschwenkbar sind, in der sie sich oberhalb des Mittelteils befinden.

### Stand der Technik

Während von der Landmaschinenindustrie derzeit immer breitere Erntevorsätze für selbst fahrende Erntemaschinen angeboten werden, die es dem Landwirt ermöglichen, ein Feld in kürzerer Zeit und mit weniger Überfahrungen abzuernten, ist die maximale Breite von Fahrzeugen beim Befahren einer Straße gesetzlich beschränkt. Die Emtevorsätze werden deshalb in der Regel auf einem Anhänger transportiert oder in eine Transportstellung eingeklappt, in der ihre Breite gegenüber ihrer Betriebsposition vermindert ist. Das Einklappen hat den Vorteil, dass ein zeitaufwändiges Abnehmen und Wiederanbringen des Erntevorsatzes von bzw. an der Erntemaschine zum Transport auf einem Anhänger entfällt.

In der DE 41 31 491 A wird ein Maiserntegerät für Feldhäcksler beschrieben, bei dem die Außenteile um horizontale, in Vorwärtsrichtung verlaufende Achsen hochklappbar sind. Gemäß der EP 0 491 405 A werden die Seitenteile um horizontale, in Vorwärtsrichtung verlaufende Achsen verschwenkt und horizontal über das Mittelteil gelegt, während in der als gattungsbildend angesehenen DE 298 17 666 U vorgeschlagen wird, bei einem fünfteiligen Erntevorsatz die inneren Seitenteile in der Transportstellung vertikal nach oben zu schwenken und die äußeren Seitenteile demgegenüber wieder nach innen in eine etwa horizontale Stellung zu drehen, so dass die äußeren Seitenteile oberhalb der Mittelteile angeordnet sind. Die DE 103 03 380 A beschreibt einen anderen fünfteiligen Erntevorsatz, bei dem die inneren Seitenteile in der Transportstellung um etwa 135° nach oben und innen geschwenkt sind, während die äußeren Seitenteile gegensinnig zu den inneren Seitenteilen um 180° nach außen geschwenkt werden.

Bei einteilig verschwenkbaren Seitenteilen ist die Arbeitsbreite des Erntevorsatzes durch die bei der Straßenfahrt maximal zulässige Höhe begrenzt, wenn die Seitenteile um 90° nach oben verschwenkt werden (DE 41 31 491 A), oder sie ist auf das Doppelte der bei der Straßenfahrt zulässigen Breite eingeschränkt, wenn die Seitenteile um 180° nach innen verschwenkt und oberhalb des Mittelteils abgelegt werden (EP 0 491 405 A). Die Anordnung nach DE 298 17 666 U ermöglicht demgegenüber größere Arbeitsbreiten, die aber ebenfalls durch Höhen- und Breitenrestriktionen bei der Straßenfahrt nach oben hin begrenzt sind, was auch für die Ausführungsform nach DE 103 03 380 A gilt.

### Aufgabe der Erfindung

Die der Erfindung zu Grunde liegende Aufgabe wird darin gesehen, einen Erntevorsatz bereitzustellen, der bei Einhaltung von Beschränkungen der Transportbreite und -höhe eine gegenüber dem Stand der Technik größere Arbeitsbreite ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz umfasst einen Mittelteil und an dessen seitlichen Enden um horizontal und in Vorwärtsrichtung verlaufende erste Achsen schwenkbar angelenkte erste Seitenteile. An den äußeren Enden der ersten Seitenteile sind zweite Seitenteile um horizontal und in Vorwärtsrichtung verlaufende zweite Achsen schwenkbar angelenkt. An den äußeren Enden der zweiten Seitenteile sind wiederum Außenteile um horizontal und in Vorwärtsrichtung verlaufende dritte Achsen schwenkbar angelenkt. Der Mittelteil ist an einer Erntemaschine abnehmbar anbringbar, sei es starr oder um eine horizontale, sich in Vorwärtsrichtung erstreckende Pendelachse zur Anpassung der Position des Erntevorsatzes an Bodenkonturen, wobei die Pendelbewegung bei einer Straßenfahrt unterbunden wird. Der Erntevorsatz umfasst demnach insgesamt (mindestens) sieben Teile, nämlich den Mittelteil, vier Seitenteile und zwei Außenteile. Alle diese Teile umfassen Mäh- und Förderelemente zum Aufnehmen und Weiterfördern von Pflanzen und erstrecken sich in einer Arbeitsstellung quer zur Vorwärtsrichtung und horizontal in einer gemeinsamen Arbeitsebene. Zum Straßentransport werden die Außen- und Seitenteile um die erwähnten Achsen in eine Transportstellung verschwenkt, wozu fremdkraftbetätigte Aktoren, insbesondere in der Form von Hydraulikzylindern, vorgesehen sind. Auf jeder Seite des Erntevorsatzes werden die Seitenteile gegen- oder gleichsinnig nach innen verschwenkt. Die Außenteile werden ebenfalls gegenüber den zweiten Seitenteilen um dritte Achsen in ihre Transportstellung verschwenkt, wobei es möglich ist, sie gleichsinnig mit den Seitenteilen der zugehörigen Seite nach innen zu verschwenken, oder sie gegensinnig dazu nach außen zu drehen.

Die zweiten Seitenteile werden in der Transportposition um 180° um die zweite Achse nach innen verschwenkt, während die Außenteile in der Transportposition um 180° um die dritte Achse nach innen verschwenkt werden. Dadurch nehmen die Seitenteile und die Außenteile in der Transportstellung eine sandwichartige Konfiguration ein, in der sie alle vertikal orientiert sind und der Außenteil sich zwischen den beiden Seitenteilen befindet. Dabei befinden sich die ersten Seitenteile am weitesten außen und die zweiten Seitenteile am weitesten innen. Die einzelnen Teile können gleichzeitig oder in geeigneter, eine Kollision vermeidender Reihenfolge nacheinander verschwenkt werden.

Auf diese Weise erreicht man bei einer relativ großen Arbeitsbreite eine kompakte Konfiguration des Erntevorsatzes in der Transportstellung. Die Erfindung eignet sich für alle Arten von Erntevorsätzen, wie Maisgebisse, Maispflücker und Schneidwerke, die an selbstfahrenden oder an Traktoren montierten Erntemaschinen insbesondere in Form von angebauten oder gezogenen oder selbstfahrenden Feldhäckslern oder Mähdreschern Verwendung finden können. Eine Förderung des Ernteguts in die Erntemaschine ist nicht zwingend erforderlich, so dass die Erfindung beispielsweise auch an Trägerfahrzeugen mit Mähgeräten in Form von Mähkreiseln oder Mähscheiben oder dgl. zum Schneiden von Gras mit verschwenkbaren Seiten- und Außenteilen Anwendung finden kann.

Die ersten Seitenteile sind in der Transportstellung vertikal orientiert, d. h. sie werden um 90° zwischen der Arbeitsstellung und der Transportstellung verschwenkt. Die zweiten Seitenteile werden um 180° nach innen verschwenkt, so dass sie dann vertikal nach unten orientiert sind.

### Ausführungsbeispiel

In der Zeichnung ist ein nachfolgend näher beschriebenes Ausführungsbeispiel der Erfindung dargestellt. Es zeigt:
- Fig. 1: eine Draufsicht auf eine selbst fahrende Erntemaschine mit einem daran angeordneten Erntevorsatz,
- Fig. 2: eine Frontansicht der linken Hälfte des Erntevorsatzes in der Arbeitsstellung, und
- Fig. 3: eine Frontansicht der linken Hälfte des Erntevorsatzes in der Transportstellung.

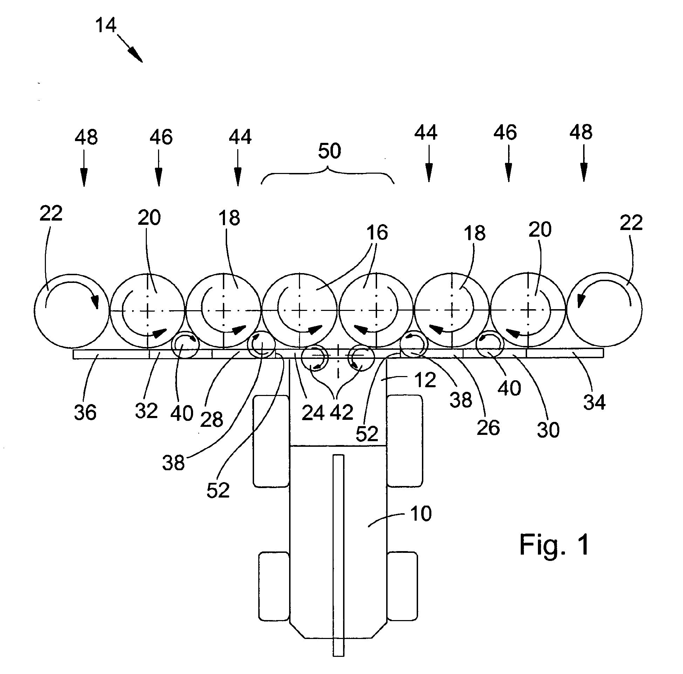

In der Figur 1 ist eine Draufsicht auf eine selbstfahrende Erntemaschine 10 in Form eines Feldhäckslers mit einem am Einzugskanal 12 der Erntemaschine 10 lösbar angebrachten Erntevorsatz 14 wiedergegeben. Der hier als Ausführungsform für ein Erntegerät beispielhaft dargestellte Erntevorsatz 14 ist in Form eines Mähvorsatzes ausgebildet und umfasst acht nebeneinander angeordnete Mäh- und Förderelemente 16, 18, 20, 22 zum Abschneiden und Einziehen stängelartigen Ernteguts, wie Mais, die reihenunabhängig arbeiten und sich aus unteren Schneidscheiben und oberen Fördertrommeln mit übereinander angeordneten Förderscheiben mit um ihren Rand verteilten Aussparungen zur Aufnahme von Pflanzen zusammensetzen, die um gemeinsame, vertikale Achsen rotieren. Da es sich hier nur um ein Ausführungsbeispiel handelt, könnten auch beliebige andere Anzahlen an und Ausführungsformen von Mähund Förderelementen 16, 18, 20, 22 Verwendung finden, insbesondere mit Endlosförderern. Die Arbeitsbreiten der einzelnen Mäh- und Förderelemente 16, 18, 20, 22 betragen in der dargestellten Ausführungsform jeweils 1,5 m (entsprechend zwei Reihen von im Abstand von 75 cm angebauten Pflanzen, wie Mais), so dass die Gesamtarbeitsbreite 12 m beträgt. Die Arbeitsbreiten der einzelnen Mäh- und Förderelemente 16, 18, 20, 22 können aber auch kleiner oder größer als erwähnt und auch unterschiedlich sein. So könnte die Arbeitsbreite der äußeren Mäh- und Förderelemente nur 75 cm betragen.

Der Erntevorsatz 14 umfasst einen Tragrahmen, der einen Mittelabschnitt 24 und zwei daran an beiden seitlichen Enden angeordnete, erste seitliche Abschnitte 26, 28 umfasst, an deren seitlichen Enden sich zweite seitliche Abschnitte 30, 32 anschließen, und an deren seitlichen Enden sich äußere Abschnitte 34, 36 anschließen. Die ersten seitlichen Abschnitte 26, 28 des Tragrahmens tragen jeweils ein Mäh- und Förderelement 18, während der Mittelabschnitt 24 des Tragrahmens zwei Mäh- und Förderelemente 16 trägt und die zweiten seitlichen Abschnitte 30, 32 des Tragrahmens jeweils ein Mäh- und Förderelement 20 tragen und die äußeren Abschnitte 34, 36 des Tragrahmens auch je ein Mäh- und Förderelement 22 tragen.

Das im Erntebetrieb von den in den gezeigten Pfeilrichtungen um die Hochachse rotierenden, durch einen Antriebsstrang von der Erntemaschine 10 her angetriebenen Mäh- und Förderelementen 16,18, 20, 22 vom Boden abgetrennte Erntematerial wird an ihren Rückseiten im Zusammenwirken mit an den ersten seitlichen Abschnitten 26, 28 des Tragrahmens angebrachten Querfördertrommeln 38 und an den zweiten seitlichen Abschnitten 30, 32 des Tragrahmens angebrachten Querfördertrommeln 40 und am Mittelabschnitt 24 angebrachten Schrägfördertrommeln 42 in den Einzugskanal 12 der Erntemaschine 10 gefördert, von der es gehäckselt und auf ein Transportfahrzeug ausgeworfen wird.

Der Mittelabschnitt 24 des Tragrahmens bildet mit den daran befestigten Mäh- und Förderelementen 16 und den zugehörigen Schrägfördertrommeln 42 einen Mittelteil 50 des Erntevorsatzes 14.

Der in Vorwärtsrichtung der Erntemaschine 10 rechte erste seitliche Abschnitt 26 des Tragrahmens bildet mit den daran befestigten Mäh- und Förderelementen 18 und der zugehörigen Querfördertrommel 38 einen ersten Seitenteil 44 des Erntevorsatzes 14. Der in Vorwärtsrichtung der Erntemaschine 10 linke erste seitliche Abschnitt 28 des Tragrahmens bildet mit den daran befestigten Mäh- und Förderelementen 18 und der zugehörigen Querfördertrommel 38 einen weiteren ersten Seitenteil 44 des Erntevorsatzes 14.

Der in Vorwärtsrichtung der Erntemaschine 10 rechte zweite seitliche Abschnitt 30 des Tragrahmens bildet mit den daran befestigten Mäh- und Förderelementen 20 und der zugehörigen Querfördertrommel 40 einen zweiten Seitenteil 46 des Erntevorsatzes 14. Der in Vorwärtsrichtung der Erntemaschine 10 linke zweite seitliche Abschnitt 32 des Tragrahmens bildet mit den daran befestigten Mäh- und Förderelementen 20 und der zugehörigen Querfördertrommel 40 einen weiteren zweiten Seitenteil 46 des Erntevorsatzes 14.

Der in Vorwärtsrichtung der Erntemaschine 10 rechte äußere Abschnitt 34 des Tragrahmens bildet mit den daran befestigten Mäh- und Förderelementen 22 einen Außenteil 48 des Erntevorsatzes 14.

Der in Vorwärtsrichtung der Erntemaschine 10 linke äußere Abschnitt 36 des Tragrahmens bildet mit den daran befestigten Mäh- und Förderelementen 22 einen weiteren Außenteil 48 des Erntevorsatzes 14.

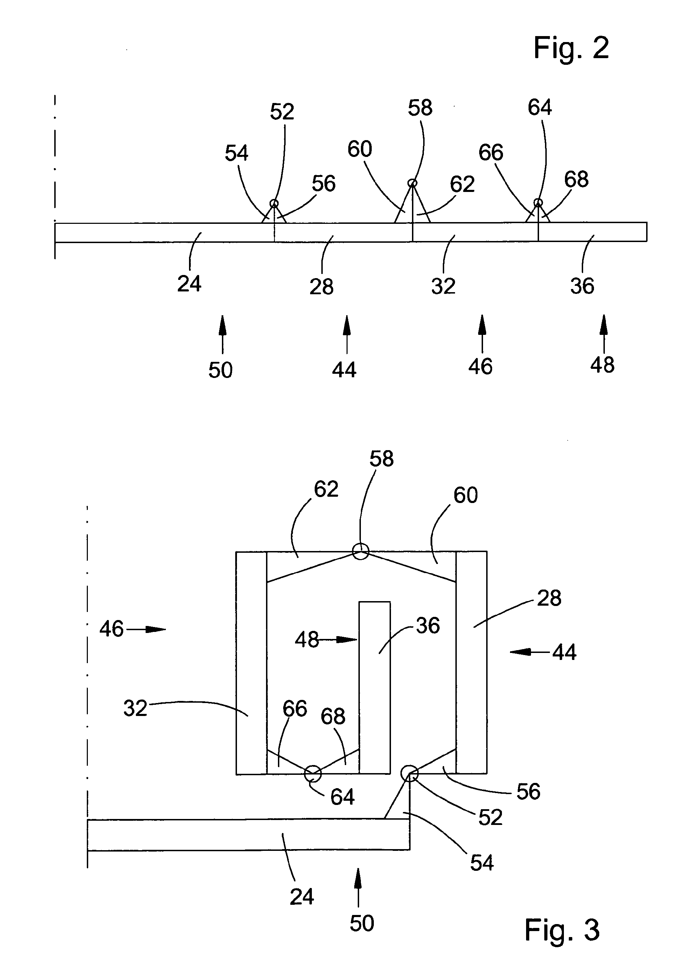

In der in den Figuren 1 und 2 dargestellten Arbeitsstellung sind die Seitenteile 44, 46 und die Außenteile 48 demnach in Vorwärtsrichtung in einer Ebene seitlich neben dem Mittelteil 50 angeordnet. Um die Breite des Erntevorsatzes 14 zum Transport auf einer Straße zu verringern und somit ein Abnehmen und anschließendes Wiederanbringen des Erntevorsatzes 14 von der Erntemaschine 10 zu ersparen, ist der Erntevorsatz 14 in eine in der Figur 3 gezeigte Transportposition verbringbar. Die Position des Mittelteils 50 relativ zum Einzugskanal 12 verändert sich in der Transportstellung gegenüber der Arbeitsstellung nicht.

Die ersten seitlichen Abschnitte 26, 28 der ersten Seitenteile 44 sind jeweils um eine sich horizontal und in Vorwärtsrichtung erstreckende erste Achse 52 schwenkbar am Mittelabschnitt 24 des Mittelteils 50 angelenkt, die durch Halterungen 54, 56 mit dem Mittelabschnitt 24 bzw. dem ersten seitlichen Abschnitt 26, 28 verbunden sind. Die zweiten seitlichen Abschnitte 30, 32 der zweiten Seitenteile 46 sind jeweils um eine sich horizontal und in Vorwärtsrichtung erstreckende zweite Achse 58 schwenkbar am benachbarten Ende des ersten seitlichen Abschnitts 26 oder 28 angelenkt, die durch Halterungen 60, 62 mit dem ersten Abschnitt 26 oder 28 bzw. dem zweiten seitlichen Abschnitt 30, 32 verbunden sind. Die äußeren Abschnitte 36, 38 der Außenteile 48 sind jeweils um eine sich horizontal und in Vorwärtsrichtung erstreckende dritte Achse 64 schwenkbar am benachbarten Ende des zweiten seitlichen Abschnitts 30 oder 32 angelenkt, die durch Halterungen 66, 68 mit dem zweiten Abschnitt 30 oder 32 bzw. dem äußeren Abschnitt 36, 38 verbunden sind. Die zweite Achse 58 ist weiter von den Abschnitten 28, 32 (bzw. 26 und 30) entfernt als die Achsen 52 und 64 von den ihnen benachbarten Abschnitten, damit in der Transportstellung der Außenteil 48 zwischen den Seitenteilen 44, 46 Platz findet.

Die Achsen 52, 58, 64 sind zweckmäßigerweise als Scharniere ausgeführt. Fremdkraftbetätigte Aktoren (nicht gezeigt) dienen in an sich bekannter Weise zum Verschwenken der Abschnitte 26 bis 36 um die Achsen 52, 58, 64. Die Aktoren können Rotationsantriebe sein, z. B. Hydraulikmotore, oder Linearantriebe, z. B. Hydraulikzylinder, die über geeignete Antriebsstränge mit den Abschnitten 26 bis 36 verbunden sind, wie Seilzüge oder an sich bekannte Gestänge (s. DE 33 24 458 A und US 4 355 690 A, deren Offenbarungen durch Verweis mit in die vorliegenden Unterlagen aufgenommen werden).

Die Aktoren verschwenken die Außenteile 48 um 180° gegenüber den zweiten Seitenteilen 46 um die dritten Achsen 64 nach innen. Anschließend oder gleichzeitig werden die zweiten Seitenteile 46 um die zweiten Achsen 58 gegenüber den ersten Seitenteilen 44 um 180° um die Achsen 58 nach innen verschwenkt. Anschließend oder gleichzeitig werden die ersten Seitenteile 44 um die ersten Achsen 52 gegenüber dem Mittelteil 50 um 90° um die Achsen 52 nach oben verschwenkt. Die Kontrolle der Reihenfolge der Schwenkbewegungen kann auf einer Erfassung der Position der Aktoren oder der Seitenteile 44, 46 und des Außenteils 48 oder auf einer Zeiterfassung basieren oder mittels einer geeigneten Reihenschaltung der Aktoren erfolgen (s. DE 298 17 666 U). Auf diese Weise erzielt man eine sandwichartige Transportstellung, in der die Seitenteile 44, 46 vertikal orientiert sind und den Außenteil 48 zwischen sich aufnehmen. Die in den Figuren 2 und 3 nicht dargestellte rechte Hälfte des Erntevorsatzes wird zur Längsmittelebene des Erntevorsatzes 14 symmetrisch in die Transportstellung verschwenkt. Die Bewegung in die Arbeitsstellung erfolgt in umgekehrter Richtung.

## Patentansprüche

1. Erntevorsatz (14) für landwirtschaftliche Erntemaschinen (10) zum Aufnehmen und Weiterfördern von Halmfrüchten, beispielsweise Maispflanzen, der beim Erntebetrieb in einer Vorwärtsrichtung über ein Feld bewegbar ist, mit einem an einer Erntemaschine (10) anbringbaren Mittelteil (50), zwei ersten Seitenteilen (44), die an jeweils einer anderen Seite des Mittelteils (50) um eine erste, sich horizontal und in der Vorwärtsrichtung erstreckende Achse (52) zwischen einer Arbeitsstellung und einer Transportstellung schwenkbar angelenkt sind, und zwei zweiten Seitenteilen (46), die jeweils außenseitig an einem der ersten Seitenteile (44) um eine zweite, sich horizontal und in der Vorwärtsrichtung erstreckende Achse (58) zwischen einer Arbeitsstellung und einer Transportstellung schwenkbar angelenkt sind, wobei der Mittelteil (50) und die ersten und zweiten Seitenteile (44, 46) in der Arbeitsstellung seitlich nebeneinander angeordnete Mäh- und Förderelemente (16, 18, 20) umfassen und die Seitenteile (44, 46) jeder Seite des Erntevorsatzes (14) gegen- oder gleichsinnig um die zugehörigen Achsen (52, 58) zwischen der Arbeitsstellung und der Transportstellung verschwenkbar sind, in der sie sich oberhalb des Mittelteils (50) befinden, **dadurch gekennzeichnet, dass** außenseitig an den zweiten Seitenteilen (46) jeweils ein Mäh- und Förderelemente (22) umfassender Außenteil (48) um eine dritte, sich horizontal und in der Vorwärtsrichtung erstreckende Achse (64) zwischen einer Arbeitsstellung und einer Transportstellung schwenkbar angelenkt ist und dass die Außenteile (48) in der Transportstellung vertikal orientiert sind und sich zwischen den vertikal orientierten Seitenteilen (44, 46) befinden.

2. Erntevorsatz (14) nach Anspruch 1, **dadurch gekennzeichnet, dass** die Außenteile (48) gleichsinnig oder gegensinnig mit den Seitenteilen (44, 46) der jeweiligen Seite des Erntevorsatzes (14) zwischen der Arbeitsstellung und der Transportstellung verschwenkbar sind.

3. Erntevorsatz (14) nach Anspruch 1 oder 2, **dadurch gekennzeichnet, dass** die ersten Seitenteile (44) zwischen der Arbeitsstellung und der Transportstellung gegenüber dem Mittelteil (50) um 90° um die erste Achse (52) verschwenkbar sind.

4. Erntevorsatz (14) nach einem der Ansprüche 1 bis 3, **dadurch gekennzeichnet, dass** die zweiten Seitenteile (46) zwischen der Arbeitsstellung und der Transportstellung gegenüber den ersten Seitenteilen (44) um 180° um die zweite Achse (58) verschwenkbar sind.

5. Erntevorsatz (14) nach einem der Ansprüche 1 bis 4, **dadurch gekennzeichnet, dass** die Außenteile (48) zwischen der Arbeitsstellung und der Transportstellung gegenüber den zweiten Seitenteilen (46) um 180° um die dritte Achse (64) verschwenkbar sind.

6. Erntevorsatz (14) nach einem der Ansprüche 1 bis 5, **dadurch gekennzeichnet, dass** die zweite Achse (58) weiter von Abschnitten (26 bis 36) eines Tragrahmens der ersten und zweiten Seitenteile (44, 46) entfernt ist als die erste Achse (52) von einem Abschnitt (24) eines Tragrahmens des Mittelteils (50) und Abschnitten (26, 28) des Tragrahmens der ersten Seitenteile (44), und dass die zweite Achse (58) weiter von Abschnitten (26 bis 36) eines Tragrahmens der ersten und zweiten Seitenteile (44, 46) entfernt ist als die dritte Achse (64) von Abschnitten (26 bis 36) eines Tragrahmens der Außenteile (48) und der zweiten Seitenteile (46).

## Claims

1. Harvester head (14) for agricultural harvesting machines (10) to gather and transport cereals, for example maize, which harvester head is moveable over a field in a forwards direction during the harvesting mode, with a central part (50) which can be attached to a harvesting machine (10), two first side parts (44) which are each articulated on a different side of the central part (50) in a manner such that they can pivot about a first axis (52), which extends horizontally and in the forwards direction, between a working position and a transport position, and two second side parts (46) which are each articulated on the outside of one of the first side parts (44) in a manner such that they can pivot about a second axis (58), which extends horizontally and in the forwards direction, between a working position and a transport position, wherein the central part (50) and the first and second side parts (44, 46) comprise mowing and conveying elements (16, 18, 20) arranged laterally next to one another in the working position, and the side parts (44, 46) of each side of the harvester head (14) can be pivoted in the opposite or same direction about the associated axes (52, 58) between the working position and the transport position, in which said side parts are located above the central part (50), **characterized in that** an outer part (48) comprising mowing and conveying elements (22) is in each case articulated on the outside of the second side parts (46) in a manner such that it can be pivoted about a third axis (64), which extends horizontally and in the forwards direction, between a working position and a transport position, and **in that** the outer parts (48) are oriented vertically in the transport position and are located between the vertically oriented side parts (44, 46).

2. Harvester head (14) according to Claim 1, **characterized in that** the outer parts (48) can be pivoted in the same direction or opposite direction with the side parts (44, 46) of the respective side of the harvester head (14) between the working position and the transport position.

3. Harvester head (14) according to Claim 1 or 2, **characterized in that** the first side parts (44) can be pivoted between the working position and the transport position by 90° about the first axis (52) in relation to the central part (50).

4. Harvest head (14) according to one of Claims 1 to 3, **characterized in that** the second side parts (46) can be pivoted between the working position and the transport position by 180° about the second axis (58) in relation to the first side parts (44).

5. Harvester head (14) according to one of Claims 1 to 4, **characterized in that** the outer parts (48) can be pivoted between the working position and the transport position by 180° about the third axis (64) in relation to the second side parts (46).

6. Harvester head (14) according to one of Claims 1 to 5, **characterized in that** the second axis (58) is further away from sections (26 to 36) of a supporting frame of the first and second side parts (44, 46) than the first axis (52) is from a section (24) of a supporting frame of the central part (50) and from sections (26, 28) of the supporting frame of the first side parts (44), and **in that** the second axis (58) is further away from sections (26 to 36) of a supporting frame of the first and second side parts (44, 46) than the third axis (64) is from sections (26 to 36) of a supporting frame of the outer parts (48) and of the second side parts (46).

## Revendications

1. Tête de récolte (14) pour des récolteuses agricoles (10), servant à cueillir et à transporter des céréales, par exemple des plants de maïs, qui peut être déplacée en mode de récolte dans une direction d'avance sur un champ, avec une partie centrale (50) pouvant être montée sur une récolteuse (10), deux premières parties latérales (44), qui sont articulées à chaque fois sur un autre côté de la partie centrale (50), de manière à pouvoir pivoter autour d'un premier axe (52) s'étendant horizontalement et dans la direction d'avance entre une position de travail et une position de transport, et deux deuxièmes parties latérales (46) qui sont articulées à chaque fois du côté extérieur sur l'une des premières parties latérales (44), de manière à pouvoir pivoter autour d'un deuxième axe (58) s'étendant horizontalement et dans la direction d'avance entre une position de travail et une position de transport, la partie centrale (50) et les premières et deuxièmes parties latérales (44, 46) comprenant des éléments de fauchage et de transport (16, 18, 20) disposés les uns à côté des autres latéralement dans la position de travail, et les parties latérales (44, 46) de chaque côté de la tête de récolte (14) pouvant pivoter en sens inverse ou dans le même sens autour des axes associés (52, 58) entre la position de travail et la position de transport, dans laquelle elles se trouvent au-dessus de la partie centrale (50), **caractérisée en ce que** du côté extérieur sur les deuxièmes parties latérales (46) est à chaque fois articulée une partie extérieure (48) comprenant des éléments de fauchage et de transport (22), de manière à pouvoir pivoter autour d'un troisième axe (64) s'étendant horizontalement et dans la direction d'avance entre une position de travail et une position de transport, et **en ce que** les parties extérieures (48) sont orientées verticalement dans la position de transport et se trouvent entre les parties latérales orientées verticalement (44, 46).

2. Tête de récolte (14) selon la revendication 1, **caractérisée en ce que** les parties extérieures (48) peuvent pivoter dans le même sens ou en sens inverse avec les parties latérales (44, 46) du côté respectif de la tête de récolte (14) entre la position de travail et la position de transport.

3. Tête de récolte (14) selon la revendication 1 ou 2, **caractérisée en ce que** les premières parties latérales (44) peuvent pivoter entre la position de travail et la position de transport par rapport à la partie centrale (50) de 90° autour du premier axe (52).

4. Tête de récolte (14) selon l'une quelconque des revendications 1 à 3, **caractérisée en ce que** les deuxièmes parties latérales (46) peuvent pivoter entre la position de travail et la position de transport par rapport aux premières parties latérales (44) de 180° autour du deuxième axe (58).

5. Tête de récolte (14) selon l'une quelconque des revendications 1 à 4, **caractérisée en ce que** les parties extérieures (48) peuvent pivoter entre la position de travail et la position de transport par rapport aux deuxièmes parties latérales (46) de 180° autour du troisième axe (64).

6. Tête de récolte (14) selon l'une quelconque des revendications 1 à 5, **caractérisée en ce que** le deuxième axe (58) est plus éloigné de portions (26 à 36) d'un châssis porteur des premières et deuxièmes parties latérales (44, 46) que le premier axe (52) d'une portion (24) d'un châssis porteur de la partie centrale (50) et de portions (26, 28) du châssis porteur des premières parties latérales (44), et **en ce que** le deuxième axe (58) est plus éloigné de portions (26 à 36) d'un châssis porteur des premières et deuxièmes parties latérales (44, 46) que le troisième axe (64) de portions (26 à 36) d'un châssis porteur des parties extérieures (48) et des deuxièmes parties latérales (46).
